# EUROPÄISCHE PATENTSCHRIFT

(11) **EP 1 281 545 B1**
(45) Veröffentlichungstag und Bekanntmachung des Hinweises auf die Patenterteilung: **24.11.2004**
(21) Anmeldenummer: 02012976.3
(22) Anmeldetag: 12.06.2002
(51) Int. Cl.: B60H 1/32, B60H 1/00

(54) **Lufgekühlte Wärmeübertrageranordnung mit einem CO2-Gaskühler**
Air cooled heat exchanger arrangement comprising a CO2 gas cooler
Dispositif d'échangeurs de chaleur refroidi par air et comprenant un refroidisseur de gaz CO2

(30) Priorität: 02.08.2001 DE 10137907
(43) Veröffentlichungstag der Anmeldung: 05.02.2003
(73) Patentinhaber: Modine Manufacturing Company, Racine/Wisconsin 53403-2552 (US)
(72) Erfinder: Vetter, Frank, Dr., 73765 Neuhausen (DE); Reichler, Mark, Dipl.-Ing., 70569 Stuttgart (DE); Welchner, Daniela, 73119 Zell u.A. (DE)
(74) Vertreter: Wolter, Klaus-Dietrich

(56) Entgegenhaltungen:
- EP-A- 1 046 524
- EP-A- 1 068 967
- DE-A- 19 843 928
- US-A- 3 479 834

## Beschreibung

Die Erfindung betrifft eine luftgekühlte Wärmeübertrageranordnung mit einem CO₂ - Gaskühler für die Klimaanlage in einem Kraftfahrzeug, in der die Wärmeübertrager in Richtung der vom Ventilator geförderten Kühlluft hintereinander angeordnet sind und der CO₂ - Gaskühler in einen Klimakreislauf, mindestens bestehend aus einem Kompressor, einem Verdampfer und einem Expansionsventil mittels entsprechender Zu - und Abströmleitungen für das CO₂ eingebunden ist.

In Klimakreisläufen, die CO₂ als Kältemittel verwenden, tritt das CO₂ mit einer Temperatur von etwa 150°C in den Gaskühler ein und wird durch den Kühlluftstrom etwa auf Umgebungstemperatur herunter gekühlt. Die relativ hohe Eintrittstemperatur des Gases bringt erhebliche Materialbeanspruchungen des aus Aluminiumblechen gefertigten Gaskühlers mit sich, was bei dessen Auslegung, zusätzlich zu den extrem hohen Drücken, die in CO₂ - Kreisläufen vorherrschen, entsprechend zu berücksichtigen ist und sich gewöhnlich in größeren Blechdicken bzw. in druckstabilerer Gestaltung niederschlägt, was ein Kostenfaktor ist.

Aufgrund dieser bekannten Verhältnisse ist es naheliegend, die Klimaanlage auf einem niedrigeren Temperaturniveau zu betreiben. Das Betreiben der Klimaanlage mit niedrigerem Temperatumiveau führt jedoch entweder zu nicht ausreichender Kühlleistung oder, da dieser Fakt nicht hinnehmbar ist, müßten die Wärmetauscher des Kreislaufs mit größeren oder effizienteren wärmetauschenden Flächen versehen werden. Die Wärmetauscher zu vergrößern ist jedoch kontraproduktiv und auch nicht im Sinne der Kraftfahrzeughersteller, die für solche Anlagen immer kleinere Bauräume verlangen bzw. zur Verfügung stellen.
Bei mit CO₂ betreibbaren Klimaanlagen wird gewöhnlich ein Zwischenwärmetauscher im Klimakreislauf vorgesehen, wie es z. B. in der dem Oberbegriff entsprechenden DE 199 18 617 A1 vorgeschlagen wurde, wo der Gaskühler und der Zwischenwärmetauscher zu einer kompakten Baueinheit zusammengefaßt sind. Solche Zwischenwärmetauscher, in denen Gas höherer Temperatur mit dem gleichen Gas niedrigerer Temperatur, welches teilweise eine flüssigen Phase enthält, einem Wärmeaustausch unterzogen werden, sind jedoch nicht zur Reduzierung der Eintrittstemperatur des Gases am Gaskühler geeignet, weil sie im Klimakreislauf funktionsbedingt hinter dem Gaskühler angeordnet werden müssen.

Insbesondere im geringen Lastbereich mit vielen Leerlaufphasen des Kraftfahrzeuges besitzen Klimaanlagen eine teilweise unbefriedigende Leistung, weil der vom Motor angetriebene Kompressor in solchen Phasen nur einen relativ geringen Massenstrom des Kältemittels fördern kann.

Aus der US 3 479 834 ist eine Wärmeübertrageranordnung bekannt, bei der drei luftgekühlte Kondensatoren zu einer Einheit zusammengefaßt wurden. Das überhitzte Kältemittel strömt zunächst in den ersten Kondensator, der unterhalb des Kühlmittelkühlers angeordnet ist, um den durch den Kühlmittelkühler strömenden Kühlluftstrom möglichst nicht zu beeinträchtigen. Danach strömt das Kältemittel in den zweiten Kondensatorabschnitt, der sich im Kühlluftstrom des Kühlmittelkühlers befindet, um anschließend in den dritten und letzten Abschnitt zu strömen, der, in Richtung des Kühlluftstromes gesehen, vor dem zweiten Abschnitt angeordnet ist. Diese Anordnung scheint aufwendig zu sein, und sie benötigt wegen des Überstandes des ersten Kondensators über den Umfang des Kühlmittelkühlers einen größeren Einbauraum.

Demgemäß liegt der Erfindung die Aufgabe zugrunde, mit kostengünstigen und einfachen Mitteln eine Reduzierung der Temperatur des Gases im Bereich des Eintritts in den Gaskühler und die Erhöhung der Wirksamkeit der Klimaanlage insbesondere im geringen Lastbereich zu erreichen.

Gemäß der Erfindung wird das sowohl durch die kennzeichnenden Merkmale des Anspruchs 1 als auch durch diejenigen der Ansprüche 2 und 4, jeweils in Verbindung mit dem Oberbegriff erreicht. Danach ist vorgesehen, dass die als Wärmetauscher ausgebildete Zuströmleitung des CO2-Gaskühlers in wärmetauschendem Kontakt mit dem durch den Kühlmittelkühler strömenden Kühlmittel und / oder mit dem Kühlluftstrom oder mit dem im Ausgleichsgefäß befindlichen Kühlmittel angeordnet ist, um eine Vorkühlung des CO₂―Gases zu erreichen.

Alternativ oder in Kombination (Anspruch 6) ist ferner vorgesehen, dass die am CO₂ - Gaseintritt des Gaskühlers angeordneten ersten Wärmetauscherrohre zumindest abschnittsweise in wärmeleitendem Kontakt mit den Wärmetauscherrohren des Kühlmittelkühlers angeordnet sind, um eine Vorkühlung des CO2-Gases zu erreichen, wobei die nachfolgenden Wärmetauscherrohre des Gaskühlers ohne wärmeleitendem Kontakt zu den Wärmetauscherrohren angeordnet sind. Der wärmeleitende Kontakt kann darin bestehen, dass sich die erwähnten Rohre unmittelbar berühren aber auch darin, dass sie mittels der Wellrippen verbunden sind. Selbstverständlich können die Rohre auch mittels Wellrippen und mittels unmittelbarer Berührung im wärmeleitenden Kontakt sein.

Die Erfindung macht sich in denkbar einfacher Weise die Erkenntnis zunutze, daß die Temperatur des Motor - Kühlmittels in jedem Fall wesentlich unter der Temperatur des Gases am Eintritt in den Gaskühler liegt. Dadurch kann die Eintrittstemperatur des Gases von etwa 150°C auf etwa Kühlmitteltemperatur abgesenkt werden. Demzufolge kann bei der Auslegung solcher Gaskühler weniger Rücksicht auf hohe Temperaturen genommen werden, bzw. der durch hohe Temperaturen verursachte Anteil muß nicht mehr so sehr beachtet werden.

Mit anderen Worten, der Gaskühler muß lediglich unter dem Gesichtspunkt der maximal auftretenden Drücke ausgelegt werden. Temperaturwechselbelastungen spielen nur noch eine untergeordnete oder zumindest eine geringere Rolle.

Ferner wurden die durch hohe Temperaturunterschiede zwischen der Kühlluft und dem Gas verursachten und immer wieder zu Problemen führenden Materialspannungen, die sich in Rissen oder Brüchen manifestieren, zumindest teilweise abgeschwächt. Solche Risse treten besonders in den Verbindungen der Flachrohrenden in den Öffnungen der Sammler auf und zwar derjenigen Verbindungen, die in der Nähe des Gaseintritts liegen. Ein wesentlicher weiterer Vorteil der erfindungsgemäßen Vorkühlung des CO₂ - Gases liegt darin, dass der Kühlluft, die durch den Gaskühler und den Kühlmittelkühler geblasen wird, beim Passieren des Gaskühlers nicht so viel ihrer Kühlfähigkeit entzogen wird. Sie besitzt deshalb beim Auftreffen auf das Kühlnetz des Kühlmittelkühlers eine niedrigere Temperatur als sie ohne Vorkühlung des Gases besitzen würde, was dort dem Wärmeaustausch mehr Effizienz verleiht.

Besonders wirksam ist die Erfindung im geringen Lastbereich des Motors des Kraftfahrzeuges und in Startphasen desselben, weil, selbst bei hohen Außentemperaturen, der Motor zunächst (ohne Kühlung) warm laufen muß, um effizienter und umweltfreundlicher zu arbeiten, was einen gewissen Zeitraum erfordert. Von der Klimaanlage wird bei hohen Außentemperaturen jedoch eine möglichst sofortige Kühlung verlangt. Deshalb trägt die Vorkühlung des CO₂-Gases mittels des in den erwähnten Phasen relativ kühlen Kühlmittels sowohl dazu bei, daß sich das Kühlmittel schneller erwärmt als auch dazu, daß die Klimaanlage ihre Kühlwirkung schneller entfaltet.

Der Gaskühler selbst arbeitet in einer bevorzugten Bauart nach dem Kreuzgegenstrom - Prinzip und ist deshalb sehr effizient im Wärmeaustausch. Er besteht aus serpentinenartig gebogenen Mehrkammer - Flachrohren, wobei die einzelnen Serpentinen eines jeden Mehrkammer - Flachrohres horizontal bzw. in Kühlluft - Strömungsrichtung hintereinander liegend angeordnet sind. Jedes Mehrkammer - Flachrohr bildet also eine Ebene und liegt mit einer seiner Schmalseiten in Kühlluft - Strömungsrichtung. Zwischen den serpentinenartig gebogenen Mehrkammer- Flachrohren sind Wellrippen oder dergleichen angeordnet, durch die die Kühlluft hindurchströmt. Die beiden Sammelrohre des Gaskühlers können an einer Seite des so gebildeten Kühlnetzes oder an gegenüberliegenden Seiten angeordnet sein.

Eine andere Bauart des Gaskühlers (Anspruch 10) arbeitet nach dem Parallelfluß - Prinzip. Diese Bauart ist ähnlich derjenigen, die beispielsweise im der Anmelderin gehörenden EP 583 851 B1 für einen Kondensator beschrieben und gezeigt wurde, der in einem konventionellen Klimakreislauf angeordnet ist. Wegen weiterer Einzelheiten dieser Bauart wird auf das genannte EP verwiesen.

Die Ansprüche 1 und 2 betreffen baulich besonders einfache Maßnahmen, die jedoch bereits zu wirksamer Absenkung der Eintrittstemperatur des Gases führen. Die Anordnung der Zuströmleitung vor oder hinter dem Kühlmittelkühler stellt darüber hinaus eine Maßnahme dar, die in bestehenden Systemen schnell und einfach nachrüstbar ist. Die Zuströmleitung kann als beripptes Rohr ausgebildet sein.

Die Maßnahmen aus den Ansprüchen 3 und 4 sind etwas aufwendiger, weil die Zuströmleitung als Wärmetauscher ausgebildet ist, der in einem Sammelkasten des Kühlmittelkühlers oder im Ausgleichsgefäß für das Kühlmittel eingebaut werden muß. Sie sind jedoch hinsichtlich der Höhe der Temperaturabsenkung des Gases die wirksamste Maßnahme.

Der Anspruch 6 sieht zur weiteren Verbesserung der Vorkühlung vor, die einzelnen Maßnahmen zu kombinieren. Beispielsweise kann die Zuströmleitung für das CO₂ ein beripptes Rohr sein, dass sich über das Kühlnetz des Kühlmittelkühlers erstreckt, also im Kühlluftstrom angeordnet ist. Diese Zuströmleitung kann zum abströmseitigen Sammelkasten des Kühlmittelkühlers gehen und zwar dort zum Eingang eines wassergekühlten Vorkühlers, der im Sammelkasten angeordnet und vom Wasser bzw. vom Kühlmittel umströmt ist. Damit könnte bereits die Eintrittstemperatur in den Vorkühler bzw. in den Wärmetauscher reduziert werden.

Durch diese und weitere in dieselbe Richtung weisende Maßnahmen wird eine deutliche Reduzierung der Eintrittstemperatur des CO₂ - Gases in den Gaskühler erreicht. Weitere Merkmale gehen aus den restlichen Patentansprüchen hervor.

Der Kühlmittelkühler ist ein Querstromkühler, bei dem - in Einbaulage im Kraftfahrzeug gesehen - die Wärmetauscherrohre (Flachrohre) horizontal und die Sammelkästen an beiden Enden der Flachrohre vertikal dazu angeordnet sind.

Die Erfindung wird nachfolgend in Ausführungsbeispielen erläutert, wozu auf die beiliegenden Figuren Bezug genommen wird, die Folgendes - lediglich in Abstraktionen - zeigen:
Fig. 1 zwei Anordnungen aus dem Stand der Technik;
Fig. 2 eine 1. Variante der Erfindung;
Fig. 3 eine 2. Variante;
Fig. 4 eine 3. Variante;
Fig. 5 wie Fig. 3 mit einem anderen Typ des Gaskühlers;
Fig. 6 ähnlich Fig. 2, mit einem anderen Gaskühler;
Fig. 7 eine 4. Variante;
Sämtliche Darstellungen sind lediglich schematische Draufsichten auf die Wärmeübertrageranordnung. Die Zeichnungsebene liegt parallel mit der Breitseite der Flachrohre **6, 12** des Gaskühlers **2** und des Kühlmittelkühlers **1**.

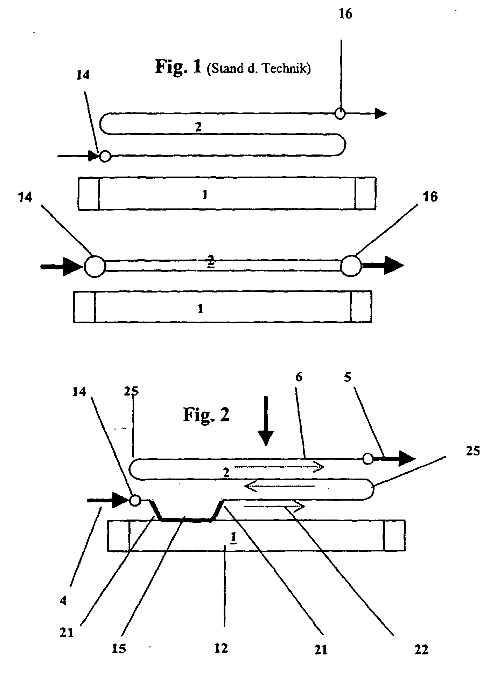

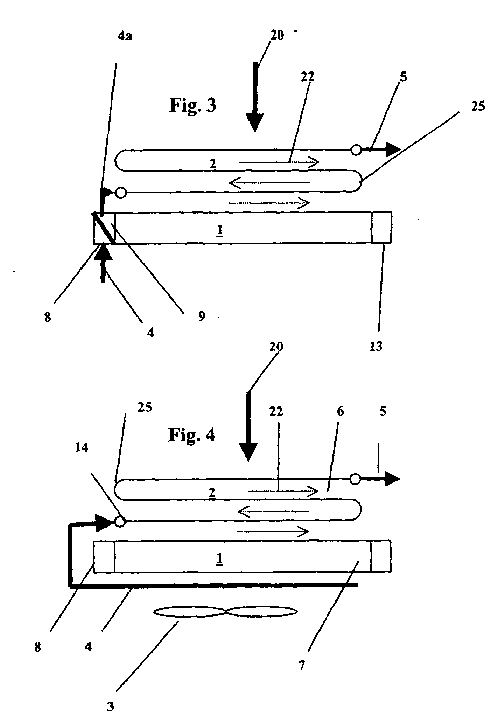

Der CO₂ - Gaskühler **2** und der Kühlmittelkühler **1** liegen in durch die Pfeile **20** markierter Kühlluftströmungsrichtung hintereinander im nicht dargestellten Motorraum eines Kraftfahrzeuges. Die Kühlluft **20** wird durch einen saugenden Ventilator **3**, der in Fig. 4 angedeutet ist, durch den Gaskühler **2** und den Kühlmittelkühler **1** gefördert, um sowohl das gasförmige CO₂ im Gaskühler **2** als auch das Kühlmittel des Motors zu kühlen. Der Gaskühler **2** und der Kühlmittelkühler **1** können in nicht gezeigter, weil hinreichend bekannter und im vorliegenden Zusammenhang unwesentlicher Weise miteinander lösbar oder unlösbar verbunden sein. Im Stand der Technik gemäß Fig. 1, liegt keine gezielte, d. h. auf die Erreichung eines Vorteils gerichtete wärmetauschende Beziehung zwischen dem Gaskühler **2** und dem Kühlmittelkühler **1** vor. Die Temperatur des Gases am Eintritt **14** des Gaskühlers **2** ist dementsprechend hoch. Die Zuströmleitung **4** zum Gaskühler **2** ist beim Stand der Technik so verlegt, wie es die Einbaubedingungen im Motorraum des Kraftfahrzeuges gerade gestatten. Eine Temperaturabsenkung des Kältemittels zwischen Kompressor und Gaskühler ist nicht vorgesehen. Die weiteren Bestandteile des Klimakreislaufs sind nicht gezeigt, weil derselbe zum Stand der Technik gehört.

In den abstrakten Darstellungen stellen der Gaseintritt **14** und der Gasaustritt **16** gleichzeitig die Sammelrohre des Gaskühlers **2** dar. Zwischen den Sammelrohren **14** und **16**, die in diesen Ausführungsbeispielen an gegenüberliegenden Seiten angeordnet sind, erstrecken sich serpentinenartig gebogene oder gerade flache Mehrkammerrohre **6**, zwischen denen sich nicht gezeigte Wellrippen oder dergleichen befinden, durch die die Kühlluft hindurchströmt. Bei den Mehrkammerrohren **6** handelt es sich um Flachrohre, die mit ihren Schmalseiten senkrecht zur Kühlluftströmungsrichtung **20** bzw. mit ihren Breitseiten in der Zeichnungsebene liegend angeordnet sind. Senkrecht zur Zeichnungsebene sind solche Mehrkammerrohre **6** abwechselnd mit den nicht gezeigten Wellrippen gestapelt und bilden das Kühlnetz des Gaskühlers **2**. Die Mehrkammerrohre **6** sind im gezeigten Ausführungsbeispiel der Fig. 2 bis 4 zweimal um jeweils 180° umgebogen, was schematisch mit den Biegungen **25** angezeigt wurde. Das Kreuzgegenstromprinzip soll durch die Strömungspfeile **22** angezeigt sein, die die Durchströmung in den Mehrkammerrohren **6** in der gezeigten Ebene verdeutlichen. Am Austritt **16** soll die Temperatur des Gases etwa auf Umgebungstemperatur liegen, was durch den Wärmeaustausch mit der Kühlluft erreicht wird, die dadurch bereits einen Teil ihrer Kühlfähigkeit eingebüßt hat, bevor sie auf das Kühlnetz des Kühlmittelkühlers **1** trifft, das aus Flachrohren **10** und dazwischen angeordneten nicht gezeigten Wellrippen oder dergleichen besteht.

Gemäß einer in Fig. 2 dargestellten ersten Variante wird der erwähnte Nachteil dadurch beseitigt, dass das am Gaseintritt **14** des Gaskühlers **2** liegende erste Wärmetauscherrohr **15** über einen Längenabschnitt in wärmeleitendem Kontakt mit einem Flachrohr **12** des Kühlmittelkühlers **1** steht. Dazu wurde das Wärmetauscherrohr **15** mit zwei Abbiegungen **21** versehen, damit es möglichst gut leitend über einen Längenabschnitt am Flachrohr **12** anliegt. Selbstverständlich können die nicht gezeigten Wellrippen zwischen den Flachrohren **12** das Wärmetauscherrohr **15** zusätzlich umschließen, um die Intensität des Wärmeaustausches zu fördern. Bei einem nicht gezeigten Ausführungsbeispiel wurden die ersten drei am Eintritt des Gaskühlers **2** angeschlossenen Wärmetauscherrohre **6** derartig mit den Flachrohren **12** des Kühlmittelkühlers **1** verbunden. Die vom nicht gezeigten Kompressor kommende Zuströmleitung **4**, die Gas hoher Temperatur und hohen Drucks transportiert, wurde in Fig. 2 lediglich als Pfeil dargestellt. Sie könnte sowohl beliebig verlegt sein als auch so wie in den Fig. 3 und 4 angeordnet werden. Femer steht die Zuströmleitung **4** selbst, in einem ebenfalls nicht gezeigten anderen Ausführungsbeispiel, ähnlich der in Fig. 2 gezeigten Variante, mit dem Flachrohr **6** des Kühlmittelkühlers **1** in wärmeleitendem Kontakt.

Die Fig. 3 zeigt ebenfalls in sehr schematischer Weise die aus der Sicht eines effizienten Wärmeaustausches beste Variante. Hier wurde ein nicht gezeigter sondern nur mit dem Bezugszeichen **9** markierter Wärmetauscher, sozusagen ein Gas - Vorkühler, im Sammelkasten **8** auf der Abströmseite des Kühlmittelkühlers **1** eingebaut. Die Zuführleitung **4** ist an den nicht gezeigten Eingang des Wärmetauschers **9** angeschlossen. Nach dem Durchströmen des Wärmetauschers **9** und nach erfolgtem Wärmeaustausch mit dem Kühlmittel des Kraftfahrzeuges tritt das CO₂ - Gas über die Leitung **4a**, die die Fortsetzung der Zuführleitung **4** ist, in den Gaskühler **2** ein. Der Einbau von Wärmetauschern **9** in Sammelkästen **8** von Kühlmittelkühlern **1** zur Kühlung von Betriebsstoffen, ist seit langem bestens bekannter Stand der Technik, weshalb sich hierzu nähere Erläuterungen durch Verweis auf solche Veröffentlichungen erübrigen. Beispielsweise kann der Wärmetauscher **9** ähnlich dem Wärmetauscher sein, der aus dem der Anmelderin gehörenden EP 678 661 B1 bekannt ist, welcher dort im abströmseitigen Sammelkasten des Kühlmittelkühlers angeordnet und ein wassergekühlter Kondensator ist.

Die Fig. 4 zeigt eine sehr kostengünstige Variante, die in Abhängigkeit von den Gegebenheiten des konkreten Anwendungsfalls benutzt werden kann. Dabei ist die Zuströmleitung **4** in Richtung **20** der Kühlluft gesehen hinter dem Kühlmittelkühler **1** angeordnet worden und erstreckt sich über die gesamte Kühlfläche desselben. Ein Teil der Wärme wird an die Kühlluft hinter dem Kühlmittelkühler **1** abgegeben, dessen Kühlleistung somit verbessert ist. Zur Verbesserung der Wärmeübertragung kann die Zuströmleitung **4** luftseitig mit Rippen versehen sein.

Es wurde nicht in einer weiteren Figur dargestellt, ist jedoch aus den Fig. 2, 3 und 4 für den Fachmann vollständig verständlich, dass die dort gezeigten Varianten in einem Anwendungsfall auch beliebig kombinierbar sind, um eine gewünschte deutlichere Reduzierung der Eintrittstemperatur des Gases zu erzielen.

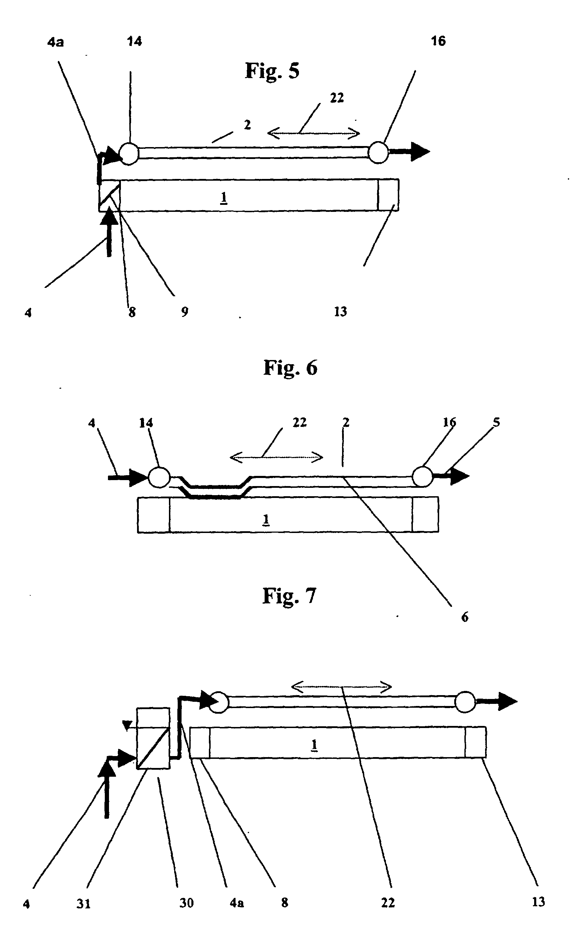

Die Fig. 5 zeigt eine der Fig. 3 ähnliche Variante, wobei der Gaskühler **2** in Parallelflußbauart ausgebildet wurde. Auch dort zeigt der Pfeil **22** die Durchströmung in den Mehrkammerrohren an. Es wurde ein Doppelpfeil eingezeichnet, womit gezeigt sein soll, dass es Gruppen von Mehrkammerrohren gibt, wobei in einer Gruppe das Kältemittel beispielsweise von links nach rechts strömt und in der benachbarten, über oder unter der zuerst genannten Gruppe angeordneten nächsten Gruppe, von rechts nach links, usw.. Dasselbe trifft auf die Fig. 6 zu, die ähnlich der beschriebenen Fig. 2 ist.

Die Fig. 7 zeigt eine weitere sehr wirksame Variante, bei der vorgesehen ist, die Zuströmleitung **4** an das zum nicht gezeigten Kühlkreislauf des Kraftfahrzeuges gehörenden Ausdehnungsgefäß **30** anzuschließen. Das Ausdehnungsgefäß **30** ist in unmittelbarer Nähe zum Kühlmittelkühler **1** und damit auch zum Gaskühler **2** angeordnet. Innerhalb des Ausdehnungsgefäßes **30** ist die Zuströmleitung 4 als Wärmetauscher **31** ausgebildet. Mit anderen Worten, in dem Ausdehnungsgefäß **30** befindet sich ein vom Kühlmittel umströmter und von dem CO2-Gas durchströmter Wärmetauscher **31**. Von dem Wärmetauscher **31** geht die Fortsetzung **4a** der Zuströmleitung **4** zum Eingang des Gaskühlers **2**.

## Patentansprüche

1. Luftgekühlte Wärmeübertrageranordnung mit einem Kühlmittelkühler (1) und einem CO₂-Gaskühler (2) für die Klimaanlage in einem Kraftfahrzeug, in der die Wärmeübertrager (1; 2) in Richtung eines Kühlluftstroms hintereinander angeordnet sind, wobei der vor dem Kühlmittelkühler (1) angeordnete CO₂-Gaskühler (2) in einen Klimakreislauf, mindestens bestehend aus einem Kompressor, einem Verdampfer und einem Expansionsventil mittels entsprechender Zu (4) - und Abströmleitungen (5) für das CO₂, einbindbar ist,
**dadurch gekennzeichnet, dass**
die als Wärmetauscher (9; 31) ausgebildete Zuströmleitung (4) des C02-Gaskühlers (2) in wärmeleitendem Kontakt mit dem durch den Kühlmittelkühler (1) strömenden Kühlmittel angeordnet ist und / oder dass die Zuströmleitung (4) im Kühlluftstrom, und zwar, in Richtung des Kühlluftstroms gesehen, vor oder hinter dem Kühlmittelkühler (1), angeordnet und über einen wesentlichen Abschnitt des Kühlnetzes (7) des Kühlmittelkühlers (1) geführt ist, um eine Vorkühlung des CO₂-Gases zu erreichen.

2. Luftgekühlte Wärmeübertrageranordnung mit einem Kühlmittelkühler (1) und einem CO₂-Gaskühler (2) für die Klimaanlage in einem Kraftfahrzeug, in der die Wärmeübertrager (1; 2) in Richtung eines Kühlluftstroms hintereinander angeordnet sind, wobei der vor dem Kühlmittelkühler (1) angeordnete CO₂-Gaskühler (2) in einem Klimakreislauf, mindestens bestehend aus einem Kompressor, einem Verdampfer und einem Expansionsventil mittels entsprechender Zu (4) - und Abströmleitungen (5) für das CO₂ einbindbar ist,
**dadurch gekennzeichnet, dass**
am CO₂ ― Gaseintritt des Gaskühlers (2) angeordnete erste Wärmetauscherrohre (15) zumindest abschnittsweise in wärmeleitendem Kontakt mit den Wärmetauscherrohren (12) des Kühlmittelkühlers (1) angeordnet sind, um eine Vorkühlung des CO2-Gases zu erreichen, wobei die nachfolgenden Wärmetauscherrohre (6) des Gaskühlers (2) keinen wärmeleitenden Kontakt mit den Wärmetauscherrohren (12) des Kühlmittelkühlers (1) besitzen.

3. Luftgekühlte Wärmeübertrageranordnung nach Anspruch 1, **dadurch gekennzeichnet, dass** die Zuströmleitung (4) derart als Wärmetauscher (9) ausgebildet ist, dass sie einen im abströmseitigen Sammelkasten (8) des Kühlmittelkühlers (1) eingeschlossenen Wärmetauscher (9) bildet, der vom Kühlmittel umströmt ist, wobei vom Wärmetauscher (9) eine Fortsetzung (4a) der Zuströmleitung (4) zum Gaseintritt (14) des Gaskühlers (2) geführt ist.

4. Luftgekühlte Wärmeübertrageranordnung mit einem Kühlmittelkühler (1), einem in räumlicher Nähe zum Kühlmittelkühler (1) angeordnetem Ausgleichsgefäß (30) für das Kühlmittel und einem CO₂-Gaskühler (2) für die Klimaanlage in einem Kraftfahrzeug, in der die Wärmeübertrager (1; 2) in Richtung eines Kühlluftstroms hintereinander angeordnet sind, wobei der vor dem Kühlmittelkühler (1) angeordnete CO₂-Gaskühler (2) in einen Klimakreislauf, mindestens bestehend aus einem Kompressor, einem Verdampfer und einem Expansionsventil mittels entsprechender Zu (4) - und Abströmleitungen (5) für das CO₂ einbindbar ist, **dadurch gekennzeichnet, dass** die als Wärmetauscher (9, 31) ausgebildete Zuströmleitung (4) des CO₂ - Gaskühlers (2) in wärmeleitendem Kontakt mit dem im Ausgleichsgefäß (30) befindlichen Kühlmittel ist, derart, dass sie einen im Ausgleichsgefäß (30) eingeschlossenen Wärmetauscher (31) bildet, der vom Kühlmittel umströmt ist, wobei vom Wärmetauscher (31) eine Fortsetzung (4a) der Zuströmleitung (4) zum Gaseintritt (14) des Gaskühlers (2) geführt ist.

5. Luftgekühlte Wärmeübertrageranordnung nach einem der vorstehenden Ansprüche, **dadurch gekennzeichnet, dass** die Zuströmleitung (4) mit Rippen oder dergleichen den Wärmeaustausch fördernden Elementen ausgestattet ist.

6. Luftgekühlte Wärmeübertrageranordnung mit einem Kühlmittelkühler (1) und einem CO₂-Gaskühler (2) für die Klimaanlage in einem Kraftfahrzeug, in der die Wärmeübertrager (1; 2) in Richtung eines Kühlluftstroms hintereinander angeordnet sind, wobei der vor dem Kühlmittelkühler (1) angeordnete CO₂-Gaskühler (2) in einem Klimakreislauf, mindestens bestehend aus einem Kompressor, einem Verdampfer und einem Expansionsventil mittels entsprechender Zu (4) - und Abströmleitungen (5) für das CO₂ einbindbar ist, **dadurch gekennzeichnet, dass**
die Wärmeübertrageranordnung eine Kombination der kennzeichnenden Merkmale aus den Ansprüchen 1 und 2 aufweist.

7. Luftgekühlte Wärmeübertrageranordnung nach einem oder mehreren der vorstehenden Ansprüche, **dadurch gekennzeichnet, dass** der Kühlmittelkühler (1) ein Querstromkühler ist, bei dem - in Einbaulage gesehen - die Kühlmittel - Flachrohre (12) horizontal verlaufen und die Sammelkästen (8; 13), vertikal dazu, an beiden Enden der Flachrohre (12) angeordnet sind.

8. Luftgekühlte Wärmeübertrageranordnung nach einem der vorstehenden Ansprüche, **dadurch gekennzeichnet, dass** der Gaskühler (2) nach dem Kreuzgegenstrom - Prinzip arbeitet und aus serpentinenartig gebogenen Mehrkammer - Flachrohren (6) besteht, die in durch die Flachseiten der Flachrohre gebildeten Ebenen angeordnet sind, wobei die Abbiegungen (25) in Kühlluft - Strömungsrichtung (20) hintereinander liegende und entgegengesetzt durchströmte Flachrohrabschnitte ergeben und wobei zwischen den Ebenen aus serpentinenartig gebogenen Mehrkammer - Flachrohren (6) Wellrippen oder dergleichen den Wärmeaustausch fördernde Elemente angeordnet sind.

9. Luftgekühlte Wärmeübertrageranordnung nach Anspruch 8, **dadurch gekennzeichnet, dass** der nach dem Kreuzgegenstrom - Prinzip arbeitende Gaskühler (2) mit an gegenüberliegenden Seiten oder mit auf einer Seite angeordneten Sammelrohren (14; 16) ausgestattet ist.

10. Luftgekühlte Wärmeübertrageranordnung nach einem der Ansprüche 1 bis 7, **dadurch gekennzeichnet, dass** der Gaskühler (2) nach dem Parallelfluß - Prinzip mit gegenüberliegenden Sammelrohren (14, 16) aufgebaut ist, die mittels gerader Mehrkammer- Flachrohre (15) verbunden sind, wobei in den Sammelrohren (14, 16) Trennwände auf unterschiedlichem Niveau angeordnet sind, die Gruppen von Mehrkammer - Flachrohren (15) bilden, die vom CO₂-Gas auf dem Weg durch den Gaskühler (2) serpentinenartig durchströmt werden.

## Claims

1. Air-cooled heat exchanger arrangement, having a coolant cooler (1) and a CO₂ gas cooler (2), for the air-conditioning system in a motor vehicle, in which the heat exchangers (1; 2) are arranged in series in the direction of a cooling-air flow, it being possible for the CO₂ gas cooler (2), which is arranged upstream of the coolant cooler (1), to be integrated into an air-conditioning circuit, at least comprising a compressor, an evaporator and an expansion valve by means of suitable feed (4) and discharge lines (5) for the CO₂, **characterized in that** the feed line (4), which is designed as heat-transfer means (9; 31), for the CO₂ gas cooler (2) is in thermally conductive contact with the coolant flowing through the coolant cooler (1), and/or **in that** the feed line (4) is arranged in the cooling-air flow, specifically, as seen in the direction of the cooling-air flow, upstream or downstream of the coolant cooler (1) and is routed over a significant section of the cooling network (7) of the coolant cooler (1), in order to precool the CO₂ gas.

2. Air-cooled heat exchanger arrangement, having a coolant cooler (1) and a CO₂ gas cooler (2), for the air-conditioning system in a motor vehicle, in which the heat exchangers (1; 2) are arranged in series in the direction of a cooling-air flow, it being possible for the CO₂ gas cooler (2), which is arranged upstream of the coolant cooler (1), to be integrated into an air-conditioning circuit, at least comprising a compressor, an evaporator and an expansion valve by means of suitable feed (4) and discharge lines (5) for the CO₂, **characterized in that** first heat-transfer tubes (15), arranged at the CO₂ gas inlet of the gas cooler (2), at least in sections are arranged in thermally conductive contact with the heat-transfer tubes (12) of the coolant cooler (1), in order to affect precooling of the CO₂ gas, while the subsequent heat-transfer tubes (6) of the gas cooler (2) are not in thermally conductive contact with the heat-transfer tubes (12) of the coolant cooler (1).

3. Air-cooled heat exchanger arrangement according to Claim 1, **characterized in that** the feed line (4) is designed as a heat-transfer means (9) in such a manner that it forms a heat-transfer means (9) which is enclosed in the discharge-side collecting vessel (8) of the coolant cooler (1) and around which the coolant flows, with the feed line (4) being continued (4a) from the heat-transfer means (9) to the gas inlet (14) of the gas cooler (2).

4. Air-cooled heat exchanger arrangement having a coolant cooler (1), a compensation vessel (30), arranged in physical proximity to the coolant cooler (1), for the coolant, and a CO₂ gas cooler (2) for the air-conditioning system in a motor vehicle, in which the heat exchangers (1; 2) are arranged in series in the direction of a cooling-air flow, it being possible for the CO₂ gas cooler (2), which is arranged upstream of the coolant cooler (1), to be integrated into an air-conditioning circuit, at least comprising a compressor, an evaporator and an expansion valve by means of suitable feed (4) and discharge lines (5) for the CO₂, **characterized in that** the feed line (4), designed as heat-transfer means (9, 31), for the CO₂ gas cooler (2) is in thermally conductive contact with the coolant in the compensation vessel (30), in such a manner that it forms a heat-transfer means (31) which is enclosed in the compensation vessel (30) and around which the coolant flows, with a continuation (4a) of the feed line (4) leading from the heat-transfer means (31) to the gas inlet (14) of the gas cooler (2).

5. Air-cooled heat exchanger arrangement according to one of the preceding claims, **characterized in that** the feed line (4) is equipped with fins or similar elements which promote heat exchange.

6. Air-cooled heat exchanger arrangement, having a coolant cooler (1) and a CO₂ gas cooler (2), for the air-conditioning system in a motor vehicle, in which the heat exchangers (1; 2) are arranged in series in the direction of a cooling-air flow, it being possible for the CO₂ gas cooler (2), which is arranged upstream of the coolant cooler (1), to be integrated into an air-conditioning circuit, at least comprising a compressor, an evaporator and an expansion valve by means of suitable feed (4) and discharge lines (5) for the CO₂, **characterized in that** the heat exchanger arrangement includes a combination of the characterizing features of Claims 1 and 2.

7. Air-cooled heat exchanger arrangement according to one or more of the preceding claims, **characterized in that** the coolant cooler (1) is a cross-current cooler, in which - as seen in the installed position - the coolant flat tubes (12) run horizontally and the collection vessels (8; 13), vertically with respect thereto, are arranged at both ends of the flat tubes (12).

8. Air-cooled heat exchanger arrangement according to one of the preceding claims, **characterized in that** the gas cooler (2) operates according to the cross-countercurrent principle and comprises multichamber flat tubes (6) which are bent in serpentine form and are arranged in planes formed by the flat sides of the flat tubes, with the bends (25) resulting in flat-tube sections which are located in series in the direction of flow (20) of the cooling air and have medium flowing through them in opposite directions, with corrugated fins or similar elements that promote heat exchange being arranged between the planes formed from multichamber flat tubes (6) bent in serpentine form.

9. Air-cooled heat exchanger arrangement according to Claim 8, **characterized in that** the gas cooler (2) which operates according to the cross-countercurrent principle is equipped with collection tubes (14; 16) arranged on opposite sides or arranged on one side.

10. Air-cooled heat exchanger arrangement according to one of Claims 1 to 7, **characterized in that** the gas cooler (2) is constructed according to the parallel flow principle with opposite collection tubes (14, 16) which are connected by means of straight multichamber flat tubes (15), partitions being arranged at different levels in the collection tubes (14, 16) so as to form groups of multichamber flat tubes (15) through which the CO₂ gas flows in serpentine form on its path through the gas cooler (2).

## Revendications

1. Dispositif d'échangeurs de chaleur refroidi par air comprenant un refroidisseur de réfrigérant (1) et un refroidisseur de gaz CO₂ (2) pour l'installation de climatisation d'un véhicule automobile, dans lequel les échangeurs de chaleur (1 ; 2) sont disposés l'un derrière l'autre dans la direction d'un courant d'air de refroidissement, le refroidisseur de gaz CO₂ (2) disposé avant le refroidisseur de réfrigérant (1) pouvant être intégré dans un circuit de climatisation, se composant au moins d'un compresseur, d'un évaporateur et d'une soupape de détente, au moyen de conduites d'amenée (4) et d'évacuation (5) correspondantes pour le CO₂,
**caractérisé en ce que**
la conduite d'amenée (4) du refroidisseur de gaz CO₂ (2) réalisée en tant qu'échangeur de chaleur (9 ; 31) est disposée en contact conducteur de la chaleur avec le réfrigérant s'écoulant à travers le refroidisseur de réfrigérant (1) et/ou **en ce que** la conduite d'amenée (4) est disposée dans le courant d'air de refroidissement, et ce, vu dans la direction du courant d'air de refroidissement, devant ou derrière le refroidisseur de réfrigérant (1), et est guidée par le biais d'une portion importante du réseau de refroidissement (7) du refroidisseur de réfrigérant (1) pour réaliser un pré-refroidissement du CO₂ gazeux.

2. Dispositif d'échangeurs de chaleur refroidi par air comprenant un refroidisseur de réfrigérant (1) et un refroidisseur de gaz CO₂ (2) pour l'installation de climatisation d'un véhicule automobile, dans lequel les échangeurs de chaleur (1 ; 2) sont disposés l'un derrière l'autre dans la direction d'un courant d'air de refroidissement, le refroidisseur de gaz CO₂ (2) disposé avant le refroidisseur de réfrigérant (1) pouvant être intégré dans un circuit de climatisation, se composant au moins d'un compresseur, d'un évaporateur et d'une soupape de détente, au moyen de conduites d'amenée (4) et d'évacuation (5) correspondantes pour le CO₂,
**caractérisé en ce que**
des premiers tubes d'échangeur de chaleur (15) disposés à l'entrée de CO₂ gazeux du refroidisseur de gaz (2) sont disposés au moins en partie en contact conducteur de la chaleur avec les tubes d'échangeur de chaleur (12) du refroidisseur de réfrigérant (1) afin de réaliser un pré-refroidissement du CO₂ gazeux, les tubes d'échangeur de chaleur suivants (6) du refroidisseur de gaz (2) ne possédant aucun contact conducteur de la chaleur avec les tubes d'échangeur de chaleur (12) du refroidisseur de réfrigérant (1).

3. Dispositif d'échangeurs de chaleur refroidi par air selon la revendication 1, **caractérisé en ce que** la conduite d'amenée (4) est réalisée sous forme d'échangeur de chaleur (9) de telle sorte qu'elle forme un échangeur de chaleur (9) enfermé dans une caisse collectrice (8) du refroidisseur de réfrigérant (1) du côté aval, lequel est parcouru par du réfrigérant, une prolongation (4a) de la conduite d'amenée (4) vers l'entrée de gaz (14) du refroidisseur de gaz (2) étant guidée depuis l'échangeur de chaleur (9).

4. Dispositif d'échangeurs de chaleur refroidi par air comprenant un refroidisseur de réfrigérant (1), un vase d'expansion (30) pour le réfrigérant disposé à proximité spatiale du refroidisseur de réfrigérant (1) et un refroidisseur de gaz CO₂ (2) pour l'installation de climatisation dans un véhicule automobile, dans lequel les échangeurs de chaleur (1 ; 2) sont disposés l'un derrière l'autre dans la direction d'un courant d'air de refroidissement, le refroidisseur de gaz CO₂ (2) disposé avant le refroidisseur de réfrigérant (1) pouvant être intégré dans un circuit de climatisation, se composant au moins d'un compresseur, d'un évaporateur et d'une soupape de détente, au moyen de conduites d'amenée (4) et d'évacuation (5) correspondantes pour le CO₂,
**caractérisé en ce que**
la conduite d'amenée (4) du refroidisseur de gaz CO₂ (2) réalisée en tant qu'échangeur de chaleur (9 ; 31) est disposée en contact conducteur de la chaleur avec le réfrigérant se trouvant dans le vase d'expansion (30), de telle sorte qu'elle forme un échangeur de chaleur (31) enfermé dans le vas d'expansion (30), qui est parcouru par du réfrigérant, une prolongation (4a) de la conduite d'amenée (4) vers l'entrée de gaz (14) du refroidisseur de gaz (2) étant guidée depuis l'échangeur de chaleur (31).

5. Dispositif d'échangeurs de chaleur refroidi par air selon l'une quelconque des revendications précédentes, **caractérisé en ce que** la conduite d'amenée (4) est configurée avec des ailettes ou des éléments similaires favorisant l'échange de chaleur.

6. Dispositif d'échangeurs de chaleur refroidi par air comprenant un refroidisseur de réfrigérant (1) et un refroidisseur de gaz CO₂ (2) pour l'installation de climatisation d'un véhicule automobile, dans lequel les échangeurs de chaleur (1 ; 2) sont disposés l'un derrière l'autre dans la direction d'un courant d'air de refroidissement, le refroidisseur de gaz CO₂ (2) disposé avant le refroidisseur de réfrigérant (1) pouvant être intégré dans un circuit de climatisation, se composant au moins d'un compresseur, d'un évaporateur et d'une soupape de détente, au moyen de conduites d'amenée (4) et d'évacuation (5) correspondantes pour le CO₂,
**caractérisé en ce que**
le dispositif d'échangeurs de chaleur présente une combinaison des propriétés caractérisantes des revendications 1 et 2.

7. Dispositif d'échangeurs de chaleur refroidi par air selon l'une ou plusieurs des revendications précédentes, **caractérisé en ce que** le refroidisseur de réfrigérant (1) est un refroidisseur à courant transversal dans lequel, vu dans la position d'installation, les tubes plats (12) pour le réfrigérant s'étendent horizontalement et les caisses collectrices (8 ; 13) sont disposées verticalement par rapport à ceux-ci, aux deux extrémités des tubes plats (12).

8. Dispositif d'échangeurs de chaleur refroidi par air selon l'une quelconque des revendications précédentes, **caractérisé en ce que** le refroidisseur de gaz (2) fonctionne selon le principe des contre-courants croisés et se compose de tubes plats (6) à plusieurs chambres courbés sous forme de serpentins, qui sont disposés dans des plans formés par les côtés plats des tubes plats, les coudages (25) dans la direction d'écoulement de l'air de refroidissement (20) produisant des portions de tubes plats situées les unes derrière les autres et parcourues en sens inverse, et des ailettes ondulées ou des éléments similaires favorisant l'échange de chaleur étant disposés entre les plans constitués par les tubes plats (6) à plusieurs chambres courbés en forme de serpentins.

9. Dispositif d'échangeurs de chaleur refroidi par air selon la revendication 8, **caractérisé en ce que** le refroidisseur de gaz (2) fonctionnant selon le principe des contre-courants croisés est muni de tubes collecteurs (14 ; 16) disposés sur des côtés opposés ou sur un seul côté.

10. Dispositif d'échangeurs de chaleur refroidi par air selon l'une quelconque des revendications 1 à 7, **caractérisé en ce que** le refroidisseur de gaz (2) est construit selon le principe des flux parallèles avec des tubes collecteurs opposés (14, 16), qui sont connectés au moyen de tubes plats (15) droits à plusieurs chambres, des parois de séparation étant prévues dans les tubes collecteurs (14, 16) à un niveau différent, et formant des groupes de tubes plats (15) à plusieurs chambres qui sont parcourus en forme de serpentin par le CO₂ gazeux sur sa trajectoire à travers le refroidisseur de gaz (2).
